(19) Europäisches Patentamt

European Patent Office

Office européen des brevets

(11) EP 0 699 559 B1

## (12) EUROPÄISCHE PATENTSCHRIFT

(45) Veröffentlichungstag und Bekanntmachung des Hinweises auf die Patenterteilung:
05.08.1998 Patentblatt 1998/32

(51) Int. Cl.$^6$: **B60Q 1/14**, B60Q 1/12

(21) Anmeldenummer: 95113789.2

(22) Anmeldetag: 01.09.1995

(54) **Automatisches Lichtsystem für Kraftfahrzeuge aller Art sowie ein Verfahren zur Steuerung eines Lichtsystems**

Automatic lighting control system for vehicle

Système de contrôle automatique de l'éclairage pour véhicule

(84) Benannte Vertragsstaaten:
AT BE CH DE DK ES FR GB GR IE IT LI LU MC NL PT SE
Benannte Erstreckungsstaaten:
LT SI

(30) Priorität: 02.09.1994 DE 4431332

(43) Veröffentlichungstag der Anmeldung:
06.03.1996 Patentblatt 1996/10

(73) Patentinhaber: **Josic, Ante**
**10 000 Zagreb (HR)**

(72) Erfinder: **Josic, Ante**
**10 000 Zagreb (HR)**

(74) Vertreter:
**Glawe, Delfs, Moll & Partner**
**Patentanwälte**
**Postfach 26 01 62**
**80058 München (DE)**

(56) Entgegenhaltungen:
**DE-A- 4 122 531        DE-A- 4 339 555**
**DE-A- 4 341 409        FR-A- 2 155 503**
**US-A- 3 179 845**

**Beschreibung**

Die Erfindung bezieht sich auf ein automatisches Lichtsystem (ALS) für Kraftfahrzeuge aller Art sowie auf ein Verfahren zur Steuerung eines Lichtsystems.

Bei heutigen Kraftfahrzeugbeleuchtungen bzw. Lichtsystemen ergibt sich ein wesentliches Defizit dadurch, daß im allgemeinen nur zwischen Abblendlicht und Fernlicht unterschieden wird und dementsprechend nur diese beiden Lichtmodi bei Fahrzeugen einstellbar sind.

Dies bringt die folgenden, z.T. gefährlichen Nachteile mit sich,

- daß die Augen des Fahrers beim ständigen Abblenden und Aufblenden ermüden,

- daß andere Fahrzeuge durch den Abblend- und Fernlicht-Umschaltvorgang die Wahrnehmung des Fahrers beeinflussen,

- daß durch das bekannte Fahrzeugbeleuchtungssystem Streckenabschnitte teilweise zu stark oder unzureichend beleuchtet sind,

- daß bei Gegenverkehr eine Blendung auftritt,

- daß eine Anpassung an Witterungs- oder Straßenverhältnisse nicht möglich ist,

- daß die Beleuchtungsstufen nicht an die Verkehrs- und Geschwindigkeitsverhältnisse angepaßt sind, d.h., das Abblendlicht ist bei einer mittleren Geschwindigkeit nicht ausreichend, während die Leuchtweite des Fernlichts zu groß ist.

Die vorstehende Aufzählung zeigt schon, daß das konventionelle Beleuchtungssystem für Fahrzeuge in keiner Weise heutigen Sicherheitsanforderungen genügt. Einen Ansatzpunkt zur Verbesserung der Fahrzeugbeleuchtung liefert die DE-A-2357960. Diese Druckschrift schlägt eine Beseitigung der Asymmetrie des Scheinwerferlichtes beim Fahren auf Schnellstraßen vor, in dem das gebräuchliche asymmetrische Abblendlicht bei Schnellfahrten so umgeschaltet wird, daß der "Asymmetrieanteil" auf die Fahrbahnmitte gelenkt wird.

Aus der DE-A-2437585 ist es bekannt, die Stellung von Scheinwerfern eines Kraftfahrzeuges abhängig von der Geschwindigkeit zu gestalten, insbesondere bei schlechtem Wetter oder hoher Geschwindigkeit eine weiterreichende Beleuchtung einzuschalten.

Auch die DE-A-3545495 Zeigt eine geschwindigkeitsabhängige Regelung der Leuchtweite, wobei insbesondere erreicht werden soll, daß die Blendwirkung anderer Verkehrsteilnehmer herabgesetzt wird.

Schließlich sei auf die DE-A-3834764 verwiesen, die eine Scheinwerfereinrichtung für Motorräder beschreibt, bei der abhängig von der Fahrzeuggeschwindigkeit und dem Lenkstangendrehwinkel die Horizontal- bzw. Vertikalposition der Scheinwerferreflektoren eingestellt wird, um bei Kurvenfahrt eine ausreichende Beleuchtung der Fahrstrecke zu gewährleisten.

Zwar werden bei diesen Lichtsystemen die Leuchtweiten bzw. die Leuchtverhältnisse abhängig von der Geschwindigkeit eingestellt, nach den Erkenntnissen des Erfinders ist damit aber die Fahrsicherheit kaum oder nur unzureichend zu verbessern. Er hat nämlich erkannt, daß die Leuchtweite und - stärke, die ein Fahrzeug in jedem Moment seiner Fahrt unbedingt benötigt, nicht ausschließlich mit der Geschwindigkeit geregelt werden kann!

Demgegenüber liegt der Erfindung die Aufgabe zugrunde, ein Lichtsystem bzw. ein Verfahren zur Steuerung eines Lichtsystems für Kraftfahrzeuge aller Art anzugeben, bei dem die Fahrsicherheit erhöht ist, die Lichtsteuerung an die Fähigkeit des menschlichen Auges angepaßt ist und die Fahrstrecke vor dem Fahrzeug zuverlässig und optimal ausgeleuchtet wird.

Eine weitere Aufgabe liegt in der Schaffung eines Lichtsystems, bei dem die Fahrzeugbeleuchtung an die Straßen- und Wetterverhältnisse angepaßt ist und die Leuchtweite und -stärke in jedem Moment der Fahrt den Sicherheitsanforderungen entsprechen, selbst wenn sich die Umgebungsverhältnisse ändern.

Eine weitere Aufgabe liegt in der Bereitstellung einer Notfallsteuerung für ein Lichtsystem.

Diese Aufgaben werden durch ein automatisches Lichtsystem gemäß Anspruch 1 bzw. durch ein Verfahren zur Steuerung eines Lichtsystems gemäß Anspruch 15 gelöst; die weiteren Ansprüche betreffen vorteilhafte Entwicklungen der Erfindung.

Mit der neuen und bis heute unbekannten wissenschaftlichen Erkenntnis über die gegenseitige, feste und unzertrennliche Verbindung zwischen der Lichtlänge und dem Anhalteweg des Fahrzeugs ist der Erfinder direkt zu der Entdeckung gekommen, mit der er sehr präzise, endgültig und ein für alle Mal definiert:

DER ANHALTEWEG EINES FAHRZEUGS IST DER EINZIGE MASS-STAB, MIT DEM FÜR DAS FAHRZEUG IN JEDEM MOMENT SEINER FAHRT DIE LICHTLÄNGE GEMESSEN UND REGULIERT WERDEN KANN!

Erfindungsgemäß wird bei einem automatischen Lichtsystem für Kraftfahrzeuge die Frontscheinwerfereinrichtung über eine Einstelleinrichtung so gesteuert, daß automatisch während der Fahrt die Mindestleuchtweite den Anhalteweg des Fahrzeugs nicht unterschreitet.

Der Erfinder ist zu der grundlegenden Erkenntnis gelangt, daß die Mindestleuchtweite (oder Mindestlichtlänge), die das Fahrzeug in jedem Moment seiner Fahrt haben muß, die Länge seines Anhaltewegs, den es im selben Moment hat, nicht unterschreiten darf!

Diese vom Erfinder aufgestellt grundlegende Beziehung kann als Formel kurz als

$$\text{Mindestleuchtweite} = \text{Anhalteweg}$$

ausgedrückt werden. Diese Formel soll auf Wunsch des Erfinders als "Marioformel" bezeichnet werden.

Zusammen mit der bekannten Beziehung, daß sich der Anhalteweg aus der Summe von Bremsweg und Reaktionsweg zusammensetzt, legt die Marioformel zu ersten Mal und universell für alle Arten von Kraftfahrzeugen die Größe der Leuchtweite (Mindestlichtlänge) fest, die ein Fahrzeug während jedes Moments seiner Fahrt haben muß, wobei diese Formel ist der einzige nötige Maßstab ist. Die Universalität ist damit begründet, daß alle fahrzeug- und fahrerspezifischen Einflüsse sowie die Einflüsse der Umgebung berücksichtigt sind.

Der Bremsweg ergibt sich aus

- der Geschwindigkeit,
- der Art des Fahrzeugs, dem Gewicht, der Art der Bereifung etc.,
- dem Straßenzustand (trocken, nass, verschneit, vereist).

Erfindungsgemäß sollte dabei bei allen Straßenbedingungen der Bremsweg für das vollbeladene Fahrzeug bei einer Normalbremsung zugrunde gelegt werden (also der jeweils längste Bremsweg; entsprechende Messungen können in einfacher Weise von den Fahrzeugherstellern oder anderen Fachleuten durchgeführt werden).

Der Reaktionsweg ist der Weg, den ein Fahrzeug zwischen dem Auftreten eines Hindernisses und der Reaktion des Fahrers auf das Hindernis bei der momentanen Geschwindigkeit zurücklegt. Er ergibt sich somit aus

- der Reaktionszeit des Fahrers die davon abhängt, ob es sich um einen Amateurfahrer oder einen Berufsfahrer handelt, wobei sie zusätzlich von der veränderten Wahrnehmung des Fahrers aufgrund der jeweiligen Sichtverhältnisse abhängt. Z. B. variiert die Reaktionszeit für für Amateurfahrer bei trockener Straße und schönem Wetter zwischen 1,0 und 1,7 sec.

Aus Sicherheitsgründen wird deshalb eine Zeit von 1,0 sec. (für Amateurfahrer) als Mindestreaktionszeit bei trockener Straße und guter Sicht erfindungsgemäß definiert.

Daraus folgt

Mindestleuchtweite = Anhalteweg bei Reaktionszeit 1 sec. Höchstleuchtweite = Anhalteweg bei Reaktionszeit 1,7 sec. wobei die Höchstleuchtweite (Maximalleuchtweite) die Leuchtweite angibt, die in jedem Moment der Fahrt auf trockener Straße bei guter Sicht maximal benötigt wird.

Entsprechende Überlegungen gelten sinngemäß für die jeweils unterschiedlichen Reaktionszeiten bei anderen Straßen-/Sichtverhältnissen.

Für Berufsfahrer wird eine Mindestreaktionszeit (trockene Straße, gute Sicht) von etwa 0,4 sec. definiert. Die Höchstreaktionszeit wird für Berufsfahrer so definiert, daß sie im gleichen Verhältnis zur Mindestreaktionszeit des Berufsfahrers steht wie die Höchstreaktionszeit zur Mindestreaktionszeit beim Amateurfahrer. Enstsprechende Verhältnisse gelten für andere Straßen-/Sichtverhältnisse.

Dies bedeutet, daß die jeweils tatsächlich eingestellte Fahrszeugleuchtweite immer zwischen den beiden Extremwerten liegt und gegeben ist durch

$$\text{Fahrzeuglichtlänge} = \text{Mindestleuchtweite} + R.,$$

wobei R von den Reaktionszeiten abhängt.

Die tatsächliche Leuchtweite (Lichtlänge) kann also auch oberhalb der Mindestleuchtweite eingestellt werden, insbesondere auf einen Wert zwischen Mindestleuchtweite und Höchstleuchtweite, die oben definiert wurden.

Durch die oben dargestellten Beziehungen sind die Grund- und Rahmenbedingungen zur Festlegung der Leuchtweiten eines automatischen Lichtsystems (ALS) gegeben, und der Fachmann ist in die Lage versetzt, durch einfache Messungen die genauen Zahlenwerte für die verschiedenen Bremswege abhängig von den Fahrzeugdaten und den Straßenverhältnissen sowie für die Reaktionszeiten abhängig von Fahrertyp und Sichtverhältnissen zu ermitteln.

Neben der Verknüpfung von Mindestleuchtweite und Anhalteweg sollten erfindungsgemäß die Leuchtweite und die Leuchtstärke eine Einheit bilden. Der Erfinder hat nämlich erkannt, daß für jede der oben genannten Sichtsituationen eine eigene, spezielle Leuchtstärke erforderlich ist, und dementsprechend wird die Leuchtstärke den Witterungsverhältnissen angepaßt, d. h. bei schlechter Sicht erhöht, bei besserer Sicht vermindert. Auch soll die Leuchtstärke an die Leuchtweite angepaßt sein, damit bei kurzer Leuchtweite keine "Überbeleuchtung" und bei langer Leuchtweite keine "Unterbeleuchtung" auftritt. Entsprechend wird bei Erhöhung der Leuchtweite die Leuchtstärke erhöht und bei Verminderung der Leuchtweite entsprechend vermindert, so daß die Lichtintensitäten im beleuchteten Bereich in etwa konstant bleiben.

Zusammen mit der Marioformel bietet dies die Gewähr dafür, daß alle Fahrzeuge in jedem Moment ihrer Fahrt eine zu jedem Zeitpunkt an den Anhalteweg angepaßte, den Sichtverhältnissen entsprechende Leuchtweite und -stärke aufweisen.

Desweiteren wird erreicht, daß bei Fahrten, bei denen die Beleuchtung erforderlich ist, der Fahrzeugführer immer darüber informiert ist, innerhalb welchen Weges er in der Lage ist, anzuhalten. Mit anderen Worten wird ihm einerseits für seine Fahrt immer genügend Leuchtweite zur Verfügung gestellt, andererseits wird ihm automatisch angezeigt, innerhalb welcher Strecke er anhalten kann. Somit erfüllt das automatische Lichtsystem gemäß der Erfindung zwei Zwecke, nämlich einerseits die Ausleuchtung eines (ausreichenden) Weges, andererseits die Signalisierung des Anhalteweges.

Vorzugsweise sind bei einer Frontscheinwerfereinrichtung erfindungsgemäß die Reflektoren schwenkbar ausgelegt, und zwar horizontal und/oder vertikal, so daß durch die Ausrichtung der Reflektoren auf den Fahrweg gleichzeitig der ausgeleuchtete Raum Kurven folgen kann und desweiteren die Leuchtweite den Fahrverhältnissen angepaßt ist. Demgegenüber ist es auch möglich, den ganzen Scheinwerfer, d.h. mit Reflektor und Glühlampen, zu verschwenken oder auch nur die Glühlampe entsprechend zu bewegen. Auch Kombinationen der oben genannten Möglichkeiten sind realisierbar.

Erfindungsgemäß wird die Einstellung der Leuchtweite vollautomatisch vorgenommen, ebenso wie die Einstellung der Leuchtrichtung (Horizontalablenkung). Die Horizontaleinstellung ist immer mit der Stellung des Lenkrades synchronisiert, sei es über die Einstellvorrichtung oder durch eine direkte Verbindung mit dem Lenkrad.

Erfindungsgemäß erfolgen die Einstellungen für die Horizontalposition und die Vertikalposition unabhängig voneinander und völlig getrennt.

Grundsätzlich sollte die Einstellung der Leuchtweite und/oder der Leuchtrichtung kontinuierlich erfolgen, es ist jedoch auch möglich, diese Größen im Abstufungen anzupassen, d.h. diskrete Werte im geeigneten Stufen vorzusehen.

Der Neigungswinkel eines Fahrzeuges ändert sich beispielsweise mit dem Beladungszustand des Fahrzeuges. Wenn beispielsweise der Kofferraum am Heck des Fahrzeugs angeordnet ist, steigt der Neigungswinkel mit zunehmender Beladung des Fahrzeugs. Entsprechendes gilt für andere Beladungszustände des Fahrzeugs.

Um den Neigungswinkel des Fahrzeugs festzustellen, ist vorzugsweise ein Neigungswinkelgeber am Fahrzeug vorgesehen. Dieser stellt vorzugsweise nicht nur den Neigungswinkel des Fahrzeugs gegen die Erdhorizontale fest, sondern den Neigungswinkel gegen die Straßenoberfläche. Das ist beispielsweise wichtig, wenn ein Fahrzeug an einem Hang od. dgl. geparkt ist. Aufgrund der Messungen des Neigungswinkelgebers kann die Leuchtweite korrigiert wedern, und zwar einerseits vor Fahrtbeginn (Beladungszustand), andererseits während der Fahrt, z. B bei plötzlichen Brems- oder Beschleunigungsmanövern.

Gemäß einer Weiterentwicklung der Erfindung ist eine Kombination von Hauptreflektoren und Nebelreflektoren bzw. Haupt- und Nebellampen vorgesehen, die unabhängig voneinander ansteuerbar sind, wobei die Nebelreflektoren an die besonderen Anforderungen bei schlechten Sichtverhältnissen angepaßt sind. Dies führt zu einer außergewöhnlichen Vielfalt von Einstellungsmöglichkeiten und dazu, daß die Lichtverhältnisse optimal an die Straßen- bzw. Witterungsverhältnisse anpaßbar sind.

Erfindungsgemäß werden zu Beginn der Fahrt die Reflektoren bzw. Scheinwerfer auf eine Anfangsposition eingestellt, die eine Minimalposition darstellt, die normalerweise nicht unterschritten wird. Die Minimalposition ist dadurch gegeben, daß sie beispielsweise eine Leuchtweite von bis zu 30 Metern abdeckt, was in der Regel für Fahrten innerhalb bewohnter Gebiete, d.h. für Geschwindigkeiten von etwa 50 km/h bei trockener Straße und guter Sicht, ausreichend ist. Bei anderen Straßen-/sichtverhältnissen entspricht diese Strecke von 30 m einer entsprechend anderen Geschwindigkeit.

Da die Leuchtweite nicht nur von fahrzeugspezifischen Daten (Einbauhöhe der Scheinwerfer, Leuchtcharakteristik der Scheinwerfer) abhängt, sondern auch vom Beladungszustand, wird die Minimalposition abhängig vom Signal des Neigungswinkelsensors bestimmt.

Durch das erfindungsgemäße Lichtsystem bzw. durch das erfindungsgemäße Verfahren zur Steuerung eines Lichtsystems werden darüberhinaus die sensorischen Belastungen des Fahrzeugführers vermindert bzw. minimiert, da die Leuchtweite automatisch und kontinuierlich verändert wird und somit keine plötzlichen Belichtungsunterschiede während der Fahrt auftreten.

Da die Leuchtweite automatisch auf den erforderlichen Wert eingestellt wird, werden Blendungen, z.B. bei Gegenverkehr oder bei Kolonenfahrten, weitgehend vermieden, insbesondere wenn die vorher definierte Maximalleuchtweite nicht überschritten wird.

Erfindungsgemäß besteht desweiteren die Möglichkeit für den Fahrzeugführer, die Leuchtweite zwischen dem durch den Anhalteweg vorgegebenen Wert und dem durch die oben definierte Anfangsposition (Minimallänge) vorgegebenem Wert einzustellen. Vorzugsweise erfolgt dabei die Verminderung der Leuchtweite in Richtung auf die Anfangsposition mit einer Minimalgeschwindigkeit, d.h., daß bei einer Auslösung vom Fahrzeugführer die Leuchtweite allmählich bis zu einem gewünschten Wert vermindert wird. Demgegenüber wird die Leuchtweite von einem eingestellten Wert auf den erforderlichen Wert in einer möglichst geringen Zeitspanne erhöht. Dies belastet einerseits die Augen des Fahrzeugführers relativ wenig (bei der Verminderung), bietet aber die erforderliche Sicherheit, indem die Mindestleuchtweite (die erforderliche Leuchtweite) sehr schnell wieder eingestellt wird.

Darüberhinaus ist eine spezielle Notfallsteuerung erfindungsgemäß vorgesehen. Die Notfallsteuerung bezieht sich auf den Fall einer Vollbremsung aufgrund eines Hindernisses in der Fahrbahn. In diesem Fall wird die Leuchtweite ab dem Zeitpunkt, in dem das Bremspedal betätigt wird, vermindert, und zwar auf den tatsächlichen Bremsweg. D.h. wenn ein Fahrzeugführer das Bremspedal so betätigt, daß eine Vollbremsung erwünscht ist, schaltet die Einstelleinrichtung die Leuchtweite auf den Bremsweg. Dadurch wird zwar die Leuchtweite vermindert, nämlich um den Reaktionsweg, dieser spielt aber keine Rolle, da in dem betrachteten Moment die Bremse bereits betätigt ist und folglich der Anhalteweg sich auf den Bremsweg reduziert. Dies hat den Vorteil, daß mögliche Hindernisse wie Fußgänger, Tiere od. dgl. nicht durch das Fahrzeug geblendet werden. Dies ist im Gegensatz zu bekannten Lichtsteuersystemen, bei denen die Leuchtweite im Notfall erhöht wird (DE-A-3545459). Es ist nämlich wichtig, keine Blendwirkung auf Fußgänger auszuüben bzw. eine Blendwirkung an Wild zu vermeiden; gleichzeitig wird nach der Betätigung des Bremspedals dem Fahrer angezeigt, innerhalb welcher Strecke er anhalten kann.

Ausführungsformen der Erfindung werden anhand der beigefügten Zeichnung erläutert. Es zeigen

Fig. 1     eine schematische Darstellung eines Kraftfahrzeugs mit dem erfindungsgemäßen automatischen Lichtsystem,
Fig. 2     eine Auf- bzw. Seitenansicht eines Reflektors bzw. einer Lampe,
Fig. 3     eine Darstellung der Leuchtcharakteristika in Extrempositionen der Reflektoren,
Fig. 4     eine Erläuterung der Horizontal-Abblendtechnik gemäß der Erfindung,
Fig. 5     eine schematische Darstellung zur Erläuterung der Leuchtweite und -richtung
Fig. 6     eine Anordnung mit zwei Reflektoren,
Fig. 7     eine schematische Darstellung zur Erläuterung der Leuchtbreite,
Fig. 8     eine Darstellung zur Erläuterung verschiedener Licht- und Reflektorformen,
Fig. 9     eine weitere Reflektorform,
Fig. 10    eine schematische Darstellung einer weiteren Reflektorform,
Fig. 11    eine Darstellung zur Beleuchtungsform,
Fig. 12    eine schematische Darstellung des Gesamtsystems,
Fig. 13    eine Variante des Bedienungsfeldes,
Fig. 14    eine schematische Darstellung zur Erläuterung eines Universalprogramms während der Fahrt
Fig. 15    eine Darstellung zur Erläuterung eines Notfallprogramms während der Fahrt und
Fig. 16    eine schematische Darstellung des Gesamtsystems.

Bei der Beschreibung der Erfindung bezeichnet der Begriff "Leuchtweite" die Strecke, die von der Scheinwerferanlage maximal ausgeleuchtet wird, d. h. den Endpunkt des beleuchteten Bereichs.

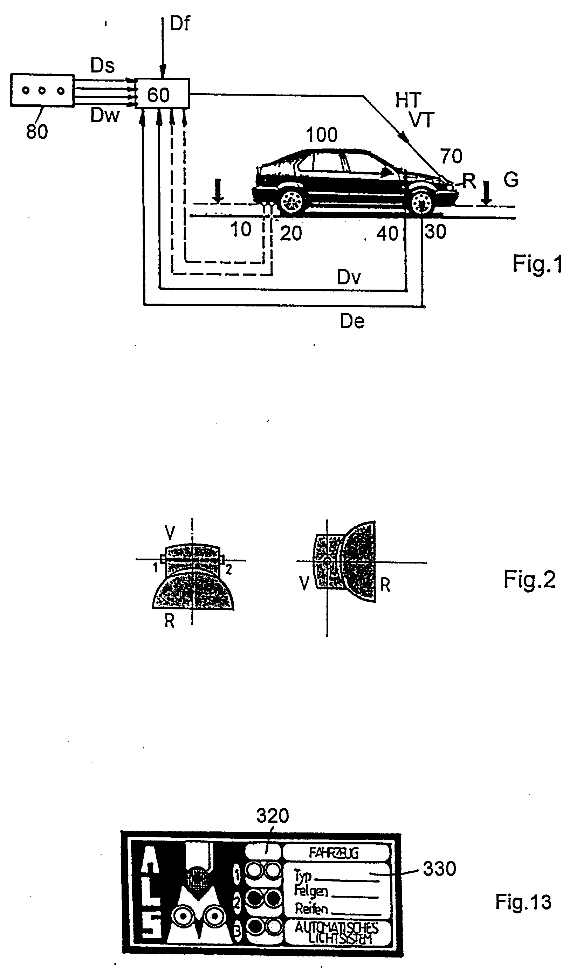

Fig. 1 zeigt schematisch ein Kraftfahrzeug, insbesondere einen Personenkraftwagen 100. Neben den gewöhnlichen Bedienungs- oder Ausstattungselementen wie einer Scheinwerferanlage 70, einer Lenkung, Gangschaltung, einem Motor etc., weist das Fahrzeug 100 zusätzlich eine Eingabeeinrichtung 80, eine Einstell- bzw. Steuereinrichtung (Multicomputer) 60 für die Scheinwerferanlage 70 , einen Vibrationssensor 10 und einen Neigungswinkelgeber 20 auf. Die Steuereinrichtung 60 dient der Steuerung bzw. Regelung der Leuchtweite der Scheinwerferanlage 70 und ist mit der Eingabeeinrichtung 80, dem Vibrationssensor 10, dem Neigungswinkelgeber 20 und der Frontscheinwerferanlage 70 verbunden.

Die Steuereinrichtung 60 erhält laufend Geschwindigkeitsdaten Dv von einem Geschwindigkeitssensor 40 (d.h. über einen Drehzahlsensor, den Tachometer, die Antriebseinrichtung, eine gesonderte Meßvorrichtung od. dgl.). Daten DI, die den aktuellen Lenkwinkel angeben, erhält die Steuereinrichtung über einen Lenkwinkelgeber 30, der an dem Lenkgestänge selbst oder an einem geeigneten Ort, z. B. an einem Rad, angebracht sein kann. Aus festen, voreingestellten Daten Df hinsichtlich der Fahrzeugcharakteristika wie -typ und Bereifung, von denen der Bremsweg abhängig ist, zusammen mit Daten Ds über die der Straßenverhältnisse und Dw über die Witterungsverhältnisse, die jeweils über die Eingabeeinrichtung 80 vom Fahrer eingegeben werden, ermittelt die Steuereinrichtung 60 abhängig von den Informationen Dv vom Sensor 40 den optimalen Wert für die Einstellung der Reflektoren und/oder der Lampen 70 der Scheinwerferanlage.

Insbesondere wird über das Signal DI des Lenkwinkelgebers 30 die "Horizontalstellung" der Scheinwerfer abhängig vom Lenkwinkel eingestellt.

Der Neigungswinkelgeber 20 dient der Feststellung des Neigungswinkels der Fahrzeuglängsachse (Horizontalachse) gegen die Fahrbahn, um die Anfangseinstellung der Scheinwerferanlage 70 vornehmen zu können, wie später beschrieben werden wird.

Dabei sollte der Neigungswinkelgeber nicht den Neigungswinkel gegen das Lot ermitteln, da für den Fall des Parkens am Hang ein falscher Wert ermittelt würde, sondern die Neigung der Horizontalachse des Kraftfahrzeuges gegen die Fahrbahn.

Neben den Werten der oben genannten Sensoren sind noch weitere Parameter maßgeblich, insbesondere ist der Bremsweg des Fahrzeuges abhängig vom Gewicht, den Straßenverhältnissen, der Ausstattung des Fahrzeugs, etc.

Wie bereits anhand der Fig. 1 dargestellt, wirkt die Einstelleinrichtung 60 auf die Reflektoren. Ein Beispiel für einen Reflektor ist in Fig. 2 dargestellt. Fig. 2 zeigt linksseitig in Aufsicht den Reflektor R, der auf einer Achse 1-2 in Vertikalrichtung schwenkbar gelagert ist. Die rechte Seite der Fig. 2 zeigt den Reflektor R in Seitenansicht. Der Reflektor hat grundsätzlich einen konventionellen Aufbau, wobei jedoch ein Antrieb V zur Verschwenkung in Vertikalrichtung vorgesehen ist. Das Beleuchtungssystem besteht vorzugsweise aus mindestens zwei Reflektoren, die rechts bzw. linksseitig des Fahrzeuges angeordnet sind; bei einem Motorrad ist entsprechend nur ein Reflektor vorgesehen.

Selbstverständlich kann der Reflektorantrieb V mechanisch, fluidbetrieben, d.h. pneumatisch, hydraulisch oder elektrohydraulisch, oder elektrisch betrieben ausgelegt sein, wobei jedoch die mechanische Variante weniger empfehlenswert ist. Der Horizontalantrieb ist nicht dargestellt, kann jedoch entsprechend ausgebildet sein. Der Horizontalantrieb ist mit dem Lenkrad gekoppelt und zwar direkt oder über den Lenkwinkelgeber 30, so daß er völlig mit der Lenkradbewegung synchronisiert ist.

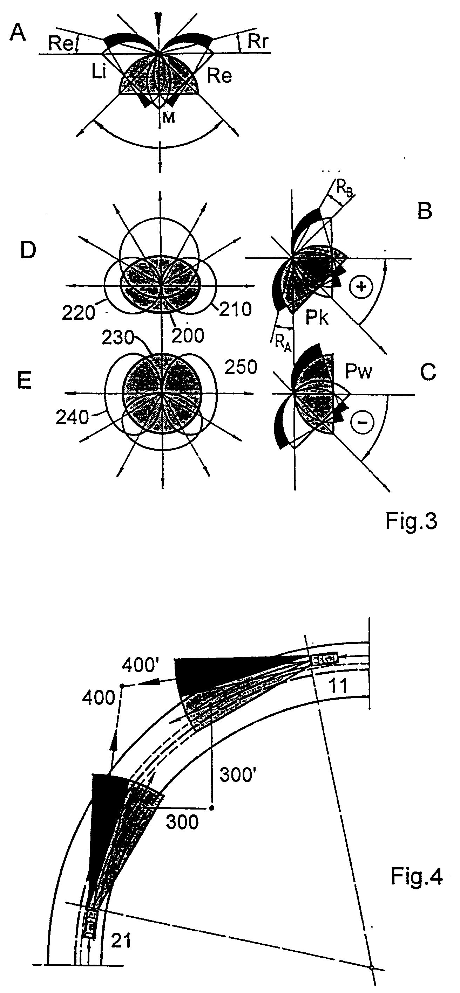

Fig. 3 zeigt schematisch die Einstellmöglichkeiten für einen einzelnen Reflektor bzw. Lampe.

Dabei ist A eine Aufsicht auf einen Reflektor und zeigt die Horizontal-Einstellpositionen des Reflektors, und zwar eine Mittenposition Mi (in der er entlang der Fahrzeuglängsachse gerichtet ist), eine maximal rechte Position Re und eine maximal linke Position Li, die der Scheinwerfer bzw. der Reflektor R abhängig vom Einschlag des Lenkrades einnehmen kann. Über den Antrieb V kann der Reflektor stufenlos zwischen den beiden Extremalpositionen Re und Li, abhängig von der Steuerung durch die Steuereinrichtung verschwenkt werden. Diese Einstellung wird im Folgenden als "Horizontaltechnik" bezeichnet.

Sicherheitsmargen Rr bzw. Rl (schwarz dargestellte Position) sind vorgesehen, um einen auch in allen Extrempositionen ausreichenden Einstellbereich sicherzustellen.

B und C sind Seitenansichten des Reflektors und zeigen den Reflektor R in einer maximal nach unten geneigten Position Pk, in der eine minimale Leuchtweite erreicht wird, bzw. in einer aufrecht stehenden Position Pw, in der eine maximale Leuchtweite erreicht wird. Sicherheitsmargen Rb und Ra sind für erforderliche manuelle Einstellungen ebenfalls vorgesehen. Auch hier erfolgt die Steuerung der Position der Reflektoren zwischen den beiden Maximalpositionen stufenlos durch die Steuereinrichtung 60. Diese Einstellungen werden im Folgenden entsprechend als "Vertikaltechnik" bezeichnet.

Es soll hier betont werden, daß grundsätzlich die Vertikaltechnik und die Horizontaltechnik unabhängig voneinander sind, d. h., die Vertikal- und die Horizontaleinstellungen erfolgen getrennt voneinander.

Die Darstellungen D und E sind schematische Darstellungen der Frontansichten des Reflektors in verschiedenen Einstellungspositionen. Die mit Bezugsziffern bezeichneten Kurven ergeben sich aus den folgenden Kombinationen:

| | |
|---|---|
| Re mit Pk | : Kreis 210 |
| Li mit Pk | : Kreis 220 |
| M mit Pk | : Ellipse 200 |
| M mit Pw | : Kreis 230 |
| Li mit Pw | : Ellipse 240 |
| Re mit Pw | : Ellipse 250 |

Bei der konventionellen Technik, in der die Horizontalpositionen der Reflektoren nicht verstellbar sind, wird die Fahrbahn bei Kurvenfahrten nicht optimal ausgeleuchtet. Dies verdeutlicht die Darstellung der Fig. 4. Der Leuchtkegel 400 eines Fahrzeugs 21 ist auf die Gegenfahrbahn gerichtet und kann somit den Gegenverkehr blenden. Der Leuchtkegel 400` des Fahrzeugs 11 beleuchtet den neben der Fahrbahn liegenden Bereich. Durch den Einsatz der Horizontaltechnik wird demgegenüber der Leuchtkegel entsprechend dem Lenkwinkel verändert, so daß sich erfindungsgemäß die Leuchtkegel 300, 300` für die Fahrzeuge ergeben und die Fahrbahn ohne Blendung des Gegenverkehrs optimal ausgeleuchtet wird.

Das bis hier beschriebene System arbeitet wie folgt.

Vor Fahrtbeginn gibt der Fahrer durch die Bedienungseinheit 80 Informationen in das System ein, und zwar a) über den Straßenzustand (trocken, nass, verschneit, vereist), b) über die Sichtverhältnisse (I: gut, II: mittel wie bei Regen oder Dunst, III: schlecht wie bei Nebel oder starkem Schneefall).

Diese Informationen werden als Daten Ds und Dw in der Steuereinheit gespeichert. Aufgrund der Signale des Vibrationssensors 10 stellt die Steuereinrichtung in einer Hilfsroutine I fest, ob das (stehende) Fahrzeug zur Ruhe gekommen ist (die Passagiere haben sich gesetzt, die Ladung befindet sich an ihrem Platz). Ist dies der Fall, ermittelt die Steuereinrichtung in der Hilfsroutine I den Neigungswinkel des Fahrzeugs gegen die Fahrbahn und stellt eine Anfangsposition (das ist eine vorgegebene minimale Leuchtweite) für die Vertikaltechnik ein. Damit ist die Initialisierung des automatischen Lichtsystems in der Hilfsroutine I beendet.

Während der Fahrt ermittelt die Steuereinrichtung in einer Universalroutine I laufend aus den festen Daten Df über das Fahrzeug, den eingegebenen Daten Ds,Dw über die Strassen- und Sichtverhältnisse und den Daten Dv des Geschwindigkeitssensors die momentan erforderliche Minimalleuchtweite entsprechend dem Anhalteweg und stellt diese über die Vertikaltechnik ausgehend von der Anfangsposition bzw von der zuletzt vorliegenden Position ein. Entsprechend wird aufgrund der Daten Dl des Lenkwinkelgebers 30 die Leuchtrichtung über die Horizontaltechnik eingestellt.

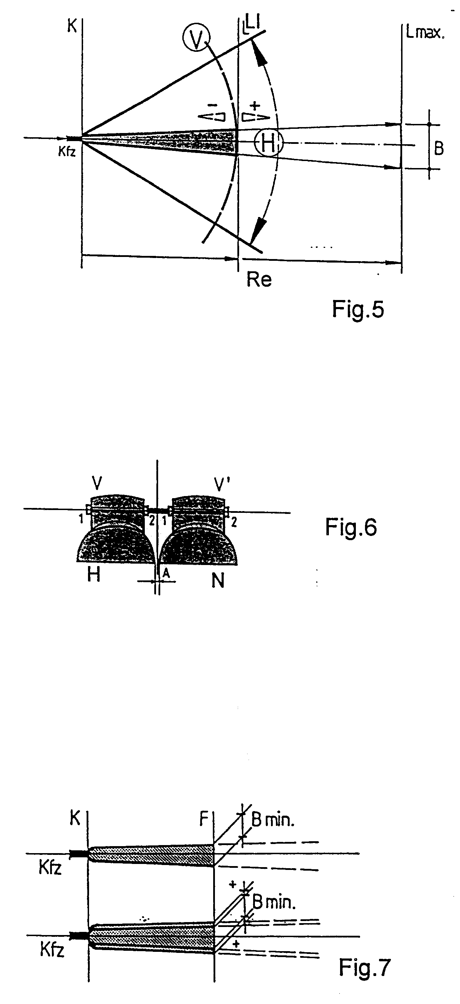

Diese Vorgänge sind in Fig. 5 verdeutlicht. Die Mindestleuchtweite L wird während der Fahrt kontinuierlich und stufenlos über die Vertikaltechnik (V) entsprechend der Momentangeschwindigkeit erhöht (Pfeil +) oder vermindert (Pfeil -), und die Leuchtrichtung wird mit der Horizontaltechnik (H) zwischen den beiden Maximalpositionen Re und Li gemäß dem Lenkwinkel eingestellt.

Während des Ablaufs der Universalroutine I wird entsprechend der Hilfsroutine I laufend der Neigungswinkel überwacht. Stellt die Hilfsroutine eine Änderung des Neigungswinkels fest, z. B. bei plötzlichen Brems- oder Beschleunigungsvorgängen, so stellt die Hilfsroutine die Position der Reflektoren entsprechend dem geänderten Neigungswinkel nach.

Obwohl in der obigen Darstellung davon ausgegangen wird, daß die Einstellungen stufenlos erfolgen, ist es natürlich auch möglich, die Einstellungen in kleineren Abstufungen vorzunehmen, soweit die Abstufungen die Erfordernisse an die Mindesatleuchtweite und die Leuchtrichtung genügen; derartige diskrete Einstellungen sollen in dem Begriff "stufenlos" enthalten sein.

Um eine optimale Anpasssung der Beleuchtung an die Witterungsverhältnisse zu ermöglichen, wird vorzugsweise ein Lichtsystem mit zwei Lampen oder Reflektoren pro Fahrzeugseite eingesetzt (System 2 + 2).

Fig. 6 zeigt eine Aufsicht auf einen kombinierten Scheinwerfer mit einem Hauptreflektor H (o. Lampe) und einem Nebelreflektor N (o. Lampe). Die beiden Reflektoren sind auf horizontalen Vertikalschwenkachsen 1-2 1'-2' angeordnet und werden unabhängig voneinander hinsichtlich der Leuchtweite eingestellt. Zwischen den Reflektoren H und N ist ein Spielraum A vorgesehen, damit die Reflektoren nicht aneinanderstoßen können.

Selbstverständlich ist es auch möglich, die Lampen (bzw. Reflektoren) in anderer Weise, beispielsweise vertikal untereinander, anzuordnen. Für die Einstellung der Leuchtweite und der Leuchtrichtung gilt das für den Einzelreflektor gesagte entsprechend, so daß eine weitere Beschreibung hier unterlassen wird.

Die Haupt- und Nebelreflektoren werden entsprechend den vorher erwähnten Sichtverhältnissen eingesetzt, und zwar bei Stufe I (gute Sicht) nur die Hauptreflektoren. In Stufe II (mittlere Sicht) sind die Hauptreflektoren eingeschaltet, werden aber in ihrer Anfangsposition belassen, und nur die Nebelreflektoren werden in Vertikaltechnik betrieben. In Stufe III (schlechte Sicht) werden sowohl die Haupt- als auch die Nebelreflektoren in der erfindungsgemäßen Weise betrieben.

Fig. 7 zeigt schematisch die Änderung der Leuchtbreite. Die Leuchtbreite des festen Teils 1 der Fahrzeugbeleuchtung (Linie F = 30 m) wird maximal verringert, was durch die Horizontalbewegung ermöglicht ist; die Leuchtbreite wird mit fixem Reflektoarenwinkel auf die Straßenkategorie hinsichtlich der Sicherheit und des Schutzes anderer Verkehrsteilnehmer abgestimmt, und zwar auf die notwendige Breite und ggf. einen Zusatz (+).

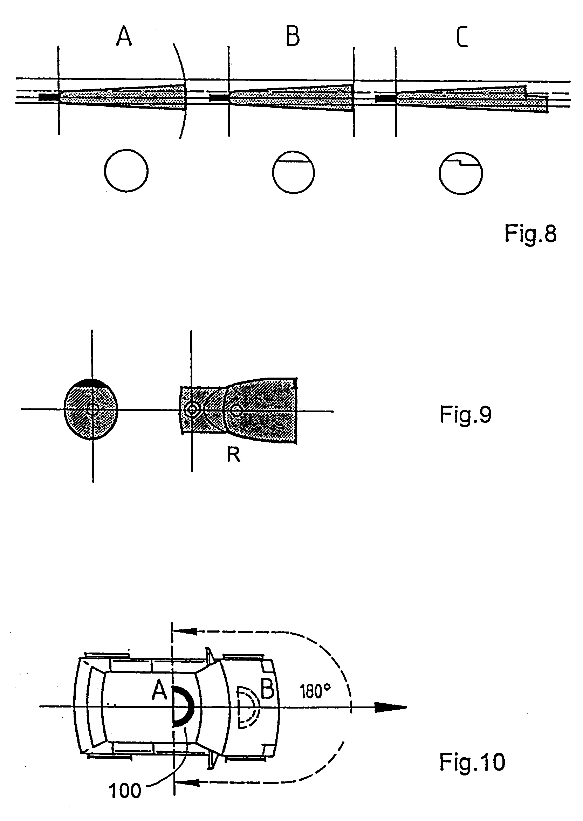

Durch die Form der Reflektoren und durch die Vertikaltechnik wird erreicht, daß die Endlinie der Fahzeugleuchtweite in beliebiger Form ausgebildet werden kann. Beispielsweise zeigt Figur 8 die Abhängigkeit der Form dieser Endlinie von der Reflektorform für drei verschiedene Fälle: A abgerundet, B gerade, C abgestuft (asymmetrisch). Insbesondere im Fall der Asymmetrie muß darauf geachtet werden, daß nur die eigene Fahrspur beleuchtet wird, weil sonst wegen der Vertikalverstellung eine Blendung eintreten könnte.

Vorzugsweise werden erfindungsgemäß Reflektoren in gestreckter Form verwendet, die die Ausleuchtung des Bereichs vor dem Fahrzeug bedeutend verbessern; ein solcher Reflektor ist beispielsweise in Fig. 9 dargestellt.

Gemäß einer Weiterentwicklung ist das automatische Lichtsystem zusätzlich mit einem Lichtsensor versehen. Der Lichtsensor ist außen am Fahrzeug angeordnet und mißt die durchschnittliche Außenlichtstärke, unabhängig von kurzzeitigen Blendungen, Abschattungen u. dgl. und gibt die entsprechenden Signale an die Steuereinrichtung 60. Die Steuereinrichtung analysiert die Signale zu mehreren Zwecken:

- wenn die Außenlichtstärke einen bestimmten Wert unterschreitet, wird der Fahrer informiert, daß das Licht einzuschalten ist,
- abhängig von der Außenlichtstärke (Wechsel Tag - Nacht) wird die Lichtstärke der Fahrzeugbeleuchtung geregelt, d. h., bei abnehmender Außenlichtstärke intensiviert und umgekehrt. Dies kann in Stufen erfolgen oder, in einer weiterentwickelten Version, kontinuierlich, so daß immer eine an die Außenlichtstärke angepasste Beleuchtungsstärke automatisch eingestellt wird.

Figur 10 zeigt schematisch ein mit einem Lichtsensor 110 ausgerüstetes Fahrzeug, wobei der Lichtsensor in zwei verschiedenen Positionen A,B angeordnet ist. Der Lichtsensor ist so ausgebildet, daß er im wesentlichen nur auf einen Lichteinfall von 180° aus Fahrtrichtung empfindlich ist und vor Lichteinfall von folgenden Fahrzeugen geschützt ist. Die in Fig 10 dargestellte Montage auf dem Dach des Fahrzeugs (Position A) ist der Position B im Vorderbereich des Fahrzeugs vorzuziehen.

Zwar ist im Idealfall die Mindestleuchtweite streng vom momentanen Anhalteweg abhängig. Aus praktischen Gründen hat es sich jedoch als sinnvoll erwiesen, wie folgt vorzugehen.

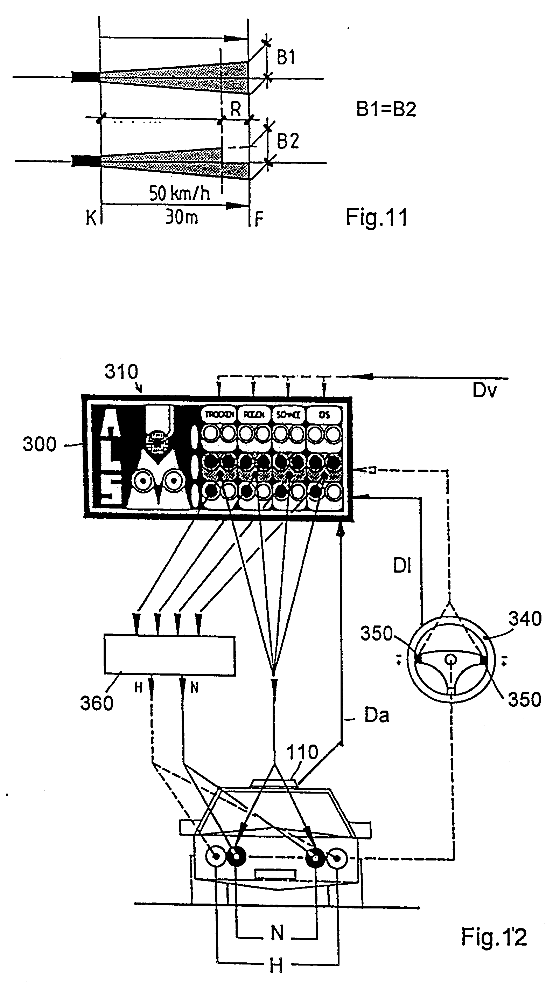

Bei einer Geschwindigkeit von etwa 50 km/h ergibt sich für nahezu alle Fahrzeuge eine Mindestleuchtweite von etwa 30 m. Diese Leuchtweite wird fest als die vorgenannte Mindestleuchtweite Mi in der Anfangsposition (Initialisierung) eingestellt und solange beibehalten (TEIL 1), bis sich aus dem ermittelten Anhalteweg eine größere erforderliche Mindestleuchtweite ergibt (TEIL 2). Fig. 11 verdeutlicht diesen Sachverhalt anhand zweier verschiedener Lichtformen, die auf die Formel "Fahrzeuglichtlänge = Mindestleuchtweite + R " optimal angepasst sind. Bei stehendem Fahrzeug (Initialisierung) und bis zu einer Geschwindigkeit von etwa 50 km/h hat das Fahrzeug eine feste Leuchtweite bis zur Linie F; bei höherer Geschwindigkeit wird die Leuchtweite variabel und überschreitet entsprechend diese Linie. Die Steuerung ist also in zwei Abschnitte unterteilt, nämlich einen ersten Abschnitt, in dem die Leuchtweite konstant gehalten wird, und einen zweiten Abschnitt, in dem die Leuchtweite auf den Anhalteweg eingestellt wird.

Fig. 12 zeigt schematisch den Aufbau des Gesamtsystems mit den bisher beschriebenen Komponenten. Das Herz des Systems ist ein Multicomputer 300, in dem die Bedienungseinheit 80 und die Steuereinrichtung 60 zusammengefaßt sind und der die vorher beschriebenen Daten Dv, Dl und Da erhält. Fest eingespeichert, bspw. in einem ROM, enhält der Multicomputer die fahrzeugspezifischen Daten zur Berechnung des Bremsweges. Über eine Tastatur 310 werden die straßen- und sichtspezifischen Daten Ds und Dw eigegeben. Wie schon erwähnt, werden die Staßenzustände in vier mögliche Kategorien eingeteilt, nämlich Trocken, Nass, mit Schnee bedeckt und mit Eis bedeckt. Auf dem Bedienungsfeld ist jedem dieser Zustände eine eigene Spalte zugeordnet. Die Reihen des Bedienungsfeldes sind den unterschiedlichen Sichtverhältnissen zugeordnet, nämlich gut I, mittel II schlecht III, so daß sich 12 unterschiedliche Kombinationen zur Ermittlung des Anhalteweges ergeben, die sich alle unterscheiden und zu völlig anderen Anforderungen an die Mindestleuchtweite und -stärke führen.

Insbesondere seien hier noch die einzelnen Grundstufen aufgeführt:

Grundstufe TROCKEN

- die Stufe I (beste Sicht) entspricht trockener Straße und schönem Wetter
- die Stufe II (mittlere Sicht) entspricht trockener Straße und Dunst, schwachem Nebel o. ä.
- die Stufe III entspricht trockener Straße und mittlerem Nebel o. ä. (dies nur kurz, da der Nebel relativ schnell zu einer nassen Straße führt)

Grundstufe REGEN

- I: nasse Straße mit schönem Wetter, leichtem Regen, oder schwachem Nebel (Dunst)
- II: nasse Straße mit mittlerem Regen oder mittlerem Nebel
- III: nasse Straße mit starkem Regen oder Nebel

Grundstufe SCHNEE

- I: Schnee auf der Straße und schönes Wetter, leichter Schneefall oder schwacher Nebel
- II: Schnee auf der Straße und mittlerer Schneefall oder mittlerer Nebel
- III: Schnee auf der Straße und starker Schneefall oder starker Nebel

Grundstufe EIS

- I: Eis auf der Straße und schönes Wetter, schwacher Regen, Nebel oder Schneefall
- II: Eis auf der Straße und mittlerer Regen, Schneefall oder Nebel

- III: Eis auf der Straße und starker Regen, Schneefall oder Nebel

Für alle diese insgesamt 12 Stufen werden die jeweiligen Bremswege und Reaktionszeiten bzw. -wege sowie die erforderlichen Beleuchtungsstärken ermittelt und in der Bedienungseinheit voreingestellt, so daß bei Auswahl einer der 12 Grundstufen die entsprechenden Werte abgerufen werden können und aufgrunddessen die Beleuchtungsweiten und -stärken optimal angepaßt werden können.

Nachdem der Fahrer die entsprechende der 12 Stufen ausgewählt hat und ggf. die Fahrerkategorie (Amateur-, Berufsfahrer) gewählt hat, ermittelt der Multicomputer für jede Momentangeschwindigkeit den Anhalteweg und bestimmt

- welche Reflektoren einzusetzen sind (nur H gesteuert, H fix und nur N gesteuert oder H+N gesteuert)
- die Vertikalstellung der eingesetzten Reflektoren
- die Horizontalstellung der eingesetzten Reflektoren
- die bei der momentanen Vertikalstellung und aufgrund der Signale des Lichtsensors 110 erforderliche Lichtstärke und gibt entsprechende Steuersignale an die einzelnen Horizontal- und Vertikalantriebe sowie über einen Lichtstärkeregler 360 an das Speisesystem für die Scheinwerfer.

Auf diese Weise hat das Fahrzeug zu jedem Zeitpunkt immer die erforderliche Leuchtweite und Leuchtstärke und bietet den Verkehrsteilnehmern immer eine optimale Sicherheit.

Selbstverständlich ist es möglich, die Leuchtweite zu berechnen; als zweckmäßig hat es sich erwiesen, die Werte der jeweiligen Leuchtweiten im voraus zu bestimmen und den entsprechenden Geschwindigkeiten in einer "Tabelle" zuzuordnen. Für jede der 12 Stufen wird dann im voraus eine eigene Tabelle angelegt und während der Fahrt die zu der gefahrenen Geschwindigkeit gehörende Leuchtweite abgerufen.

In einer Weiterentwicklung ist eine Sensoreinrichtung am Fahrzeug vorgesehen, die automatisch feststellt, ob die Straße trocken, naß, schneebedeckt oder vereist ist. Das Bedienungsfeld kann dann, wie in Fig. 13 dargestellt ist, vereinfacht werden. Dem Fahrer wird über eine Anzeige 320 der Straßenzustand als Symbol oder durch Schrift mitgeteilt, und er muß nur noch die Informationen über die Sichtverhältnisse eingeben. Desweiteren ist ein austauschbares Modul 330 vorgesehen, in dem die fahrzeugspezifischen Daten gespeichert sind und von dem Multicopmuter abgerufen werden. Werden Änderungen am Fahrzeug vorgenommen (bspw. Bereifung), so muß nur das Modul modifiziert oder ausgetauscht werden; entsprechendes gilt, wenn das automatische Lichtsystem in ein anderes Fahrzeug eingebaut wird. Zur Kontrolle sind außen am Modul die wichtigsten Fahrzeugdaten fur den Fahrer sichtbar angebracht.

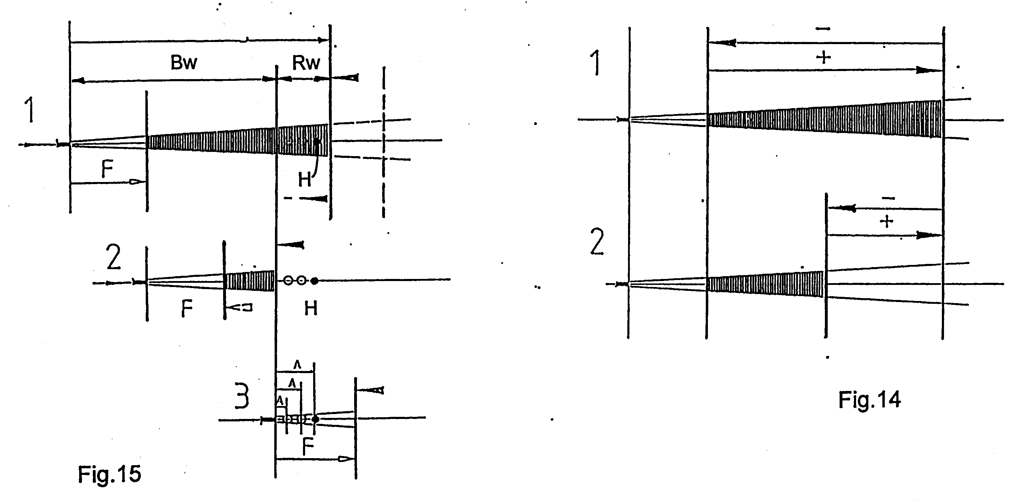

Gemäß der bevorzugten Ausführungsform steuert das Steuersystem die Leuchtweite ständig auf etwa den Anhalteweg, und wegen der Steuerung der Leuchtstärke und -breite kann es eigentlich nicht zu einer Blendung anderer Vekehrsteilnehmer kommen; es ist jedoch sinnvoll, die Möglichkeit vorzusehen, den Leuchtweitenbereich zeitweilig zu vermindern, beispielsweise bei Gegenverkehr. Zu diesem Zweck ist erfindungsgemäß eine Universalroutine II vorgesehen, die über Bedienungselemente 350, z. B. Tasten am Lenkrad 340 (Fig. 12), ausgelöst wird. Nach der Betätigung eines Bedienungselementes vermindert (-) gemäß Fig. 15 die Steuereinrichtung die Leuchtweite stetig bis zu dem oben genannten Mindestwert M, so daß eine mögliche Blendung von Gegenverkehr vermieden wird. Ist es nicht erforderlich, die Leuchtweite auf den Mindestwert Mi zurückzunehmen, beispielsweise weil inzwischen das entgegenkommende Fahrzeug vorbeigefahren ist, wird durch eine erneute Betätigung des Bedienungselementes der vorbeschriebene Vorgang umgekehrt, und die Steuereinrichtung erhöht (+) die Leuchtweite wieder auf den Wert des Anhalteweges. Damit ist der Ablauf der Universalroutine II beendet.

Aus Sicherheitsgründen sollte dabei die Steuerung so erfolgen, daß die Leuchtweite in einer möglichst langsamen Rate vermindert und in einer möglichst hohen Rate erhöht wird. Auf diese Weise wird im Mittel der beleuchtete Bereich auch bei Leuchtweitenreduzierung möglichst groß gehalten.

In Fig. 15 sind die Verhältnisse für einen Notfall, d. h. bei einer Vollbremsung dargestellt. Insbesondere ist der Anhalteweg schematisch in den Bremsweg Bw und den Reaktionsweg Rw unterteilt (Darstellung 1). Für den Fall einer Notfallbremsung, weil bspw. ein Hindernis H plötzlich auftaucht, wird ein Notfallsignal abgegeben, das den Ablauf einer Universalroutine III auslöst, bei der die Steuereinrichtung die Leuchtweite automatisch auf die momentan noch benötigte Bremsweglänge vermindert (Darstellung 2), bis der Anfangswert der Leuchtweite erreicht ist und das Fahrzeug steht (Darstellung 3). Dadurch werden beispielsweise Menschen oder Wildtiere nicht unnötig geblendet. Dies steht im Gegensatz zu bekannten Systemen, die im Notfall die Beleuchtungsstärke erhöhen, wobei Wild oder Personen auf der Fahrbahn zusätzlich geblendet werden, was bei dem erfindungsgemäßen Ansatz entfällt. Zudem erhält Bedienungsperson zumindest während des Beginns des Bremsvorgangs eine Information über den noch verbleibenden Bremsweg.

Die Notfallregelung (Universalroutine III) tritt ein, wenn eine Vollbremsung durchgeführt wird. Deshalb kann das Notfallsignal beispielsweise durch eine Einrichtung erzeugt werden, die das Bremssystem (Pedal, Bremsleitung) überwacht, oder durch einen Beschleunigungssensor; auch ist es möglich, das Notfallsignal in der Steuereinrichtung selbst zu erzeugen, in dem das Geschwindigkeitssignal durch Differenzierung in einen Beschleunigungswert umgerechnet wird und dieser Wert mit einem vorgegebenen Wert verglichen wird, der einer Vollbremsung entspricht.

Neben der oben dargestellten, bevorzugten ersten Variante der Universalroutine III für den Notfall, sind auch andere Varianten möglich. Bei der zweiten Variante wird im Falle einer Notfallbremsung die Leuchtweite nicht geändert, sie verbleibt somit konstant auf dem Wert des Anhalteweges kurz vor Betätigung der Bremse. Aufgrund dessen wird während des Bremsvorgangs ein sehr weiter Bereich ausgeleuchtet, was zwar einen besseren Überblick bietet, andererseits mit den oben beschriebenen Nachteilen der Blendung von anderen Personen oder Tieren verbunden ist.

Die dritte Variante besteht darin, die Leuchtweite im Fall der Notbremsung in bezug auf die Straße fixiert zu halten, d.h. die Leuchtweite wird so gesteuert, daß der vom Fahrzeug am weitesten entfernte, noch ausgeleuchtete Punkt fixiert wird und die Leuchtweite dann bei Annäherung des Fahrzeugs an diesen Punkt entsprechend so lange vermindert wird, bis die Minimalleuchtweite erreicht ist. Durch diese Vorgehensweise werden andere Verkehrsteilnehmer oder Tiere weniger geblendet als in der zweiten Variante, so daß diese Variante der zweiten Variante vorzuziehen ist.

Es muß jedoch betont werden, daß die anfangs dargestellten Notfallsteuerung, bei der im Fall der Notfallbremsung die Leuchtweite auf den Bremsweg eingestellt wird, dem Erfinder als sinnvollste Möglichkeit erscheint, da die in diesem Fall erhaltene Leuchtweite für jeden Fall ausreichend ist und andere Verkehrsteilnehmer am wenigsten beeinträchtigt.

Zusammenfassend kann festgestellt werden, daß durch das erfindungsgemäße System permanent und kontinuierlich dem Fahrer angezeigt wird, in welchem Abstand er anhalten kann. Somit wird ein erhebliches Sicherheitsmoment geschaffen; eine derartige Möglichkeit bietet keins der bekannten Beleuchtungssysteme.

Da es während der Fahrt zu Änderungen der Sicht u./o der Straßenverhältnisse kommen kann, ist erfindungsgemäß eine Hilfsroutine II vorgesehen, die eine Umschaltung zwischen den 12 Stufen des ALS umsetzt. Beispielsweise kann es während der Fahrt vorkommen, daß die Grundstufe (gemäß Fig. 12) gewechselt werden muß, beispielsweise bei einer Umschaltung von "Sicht gut, I" zu "mittel II". In diesem Fall muß am Bedienungsfeld von einer Beleuchtung mit nur den Hauptscheinwerfern auf eine Beleuchtung mit den Nebelscheinwerfern umgeschaltet werden, und dies geschieht mit der genannten Hilfsroutine II. Dabei werden nach der genannten Umschaltung die Nebelreflektoren eingeschaltet und auf den durch den Anhalteweg vorgegebenen Wert eingestellt. Entsprechend werden die Hauptscheinwerfer auf den Anfangswert Mi eingestellt und anschließend ausgeschaltet. Diese Vorgänge können gleichzeitig oder nacheinander ablaufen.

Die bei dem erfindungsgemäßen automatischen Lichtsystem ablaufenden Steuervorgänge seien im folgenden nochmals kurz im Zusammenhang dargestellt:

Zu Beginn der Fahrt erfolgt eine Anfangssteuerung (Hilfsroutine I), die die Anfangsposition der Scheinwerfer einstellt, und zwar basierend auf den Werten des Neigungswinkelgebers, sobald der Vibrationssensor anzeigt, daß das Fahrzeug zur Ruhe gekommen ist.

Anschließend läuft die Universalsteuerung I, die während der gesamten Fahrt, ausgehend von der Anfangsleuchtweite die Leuchtweite dem Anhalteweg anpaßt (vergl. Fig. 14), gegebenenfalls abhängig vom Neigungswinkel über die Hilfsroutine I. Diese Universalroutine läuft während der gesamten Fahrt ab, mit den folgenden Ausnahmen:

Bei der Universalroutine II (Fig. 14) kann der Fahrer "abblenden", d.h. die Leuchtweite willkürlich bis zum Minimalwert vermindern, wobei die Verminderung jeweils möglich langsam, die Erhöhung (entsprechend dem "Aufblenden") möglichst schnell erfolgt. Es besteht dabei auch die Möglichkeit, die Beleuchtung nur soweit zu verkürzen, daß die Beleuchtungsbreite so weit vermindert ist, daß durch die Beleuchtung der Gegenverkehr nicht gestört wird.

Eine weitere Ausnahme bildet die Notfallsteuerung (Universalroutine III), und zwar, alternativ, die Notfallsteuerung 1, bei der die Leuchtweite auf den Bremsweg eingestellt wird, die Notfallsteuerung 2, bei der die Leuchtweite auf dem Wert des Anhalteweges vor der Bremsung konstant gehalten wird, oder die Notfallsteuerung 3, bei der die Leuchtweite auf eine Linie, die durch das Ende des Anhalteweges auf der Fahrbahn kurz vor der Notfallbremsung definiert ist, fixiert ist.

Darüber hinaus wird bei Umschaltung der Fahrstufen, die oben dargestellte Hilfsroutine II eingesetzt, die die Haupt- und Nebelscheinwerfer entsprechend der gewählten Stufe einstellt.

Grundsätzlich ist es bei dem erfindungsgemäßen ALS nicht erforderlich, daß asymmetrisches Licht vorliegt. Auch kann das Licht mit Hilfe des Beleuchtungswinkels der Reflektoren je nach Wunsch in der Breite geformt werden. Das bedeutet, daß man von jeder Seite aus problemlos einen größeren oder kleineren Sicherheitszusatz erreichen kann. Insbesondere wird erfindungsgemäß die Lichtbreite an die jeweilige Breite der Straßenkategorie (z. B. Landstraße, zweispurig) angepaßt, so daß immer die eigene Fahrbahn optimal ausgeleuchtet wird und der Gegenverkehr nicht geblendet wird.

Der fixe Teil von 30m ist auch für alle Lichtkonstruktionen der anderen ALS-Grundstufen als "Trocken I" vorgesehen. In diesen Fällen wird die fixe Leuchtweite von 30m schon bei einer geringeren Fahrgeschwindigkeit als 50km/h überschritten.

Alle hier beschriebenen Steuerungen können in einfacher Weise vom Fachmann beispielsweise mittels eines Mikroprozessorsystems o. dgl. mit einer Zentraleinheit, Speichern, Schnittstellen usw. realisiert werden; da diese Komponenten zum Stand der Technik gehören, wird ihre Beschreibung hier unterlassen.

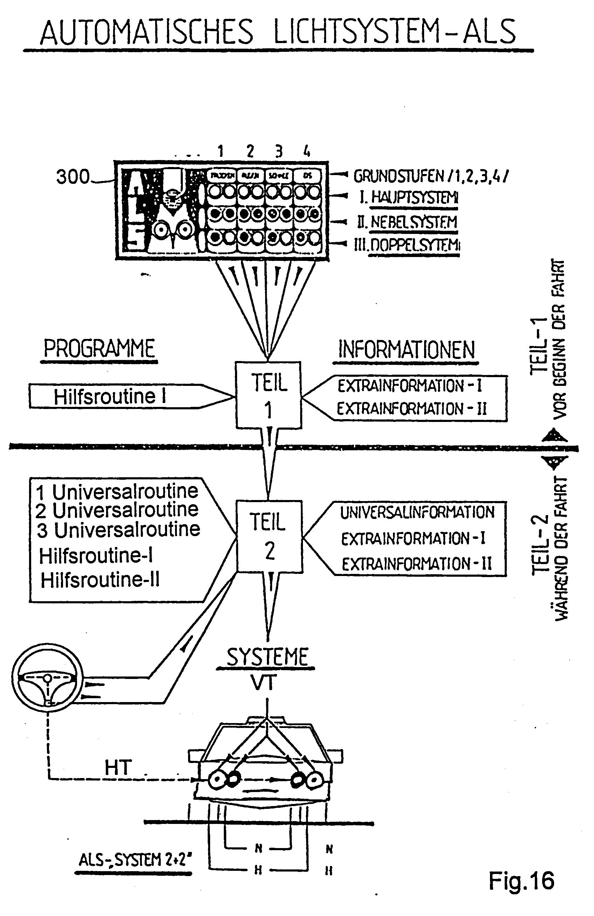

Das erfindungsgemäße automatische Lichtsystem, das in Fig. 16 nochmal insgesamt dargestellt ist, ist ein Mulifunktionssystem (Programme und Informationen), bei dem fixe Programme mit fixen Daten über den Fahrzeugtyp, mit einstellbaren Informationen über die Straßenzustands- und Sichtverhältnisse und mit momentanen Daten über die Geschwindigkeit ein System zur Steuerung der Leuchtweite und der Leuchtstärke des Fahrzeugs bilden.Dabvei werden Einstellungen zu Beginn der Fahrt vorgenommen (Hilfsroutine I), und zwar aufgrund des Neigugswinkels (Exrainformation I) und des Außenlichts (Exrainformation II). Während der Fehrt werden die Leuchtweite und -stärke durch 3 Universalroutinen und 2 Hilfsroutinen gesteuert, abhängig von Extrainformationen und der Universalinformation Geschwindigkeit. Dieses Multifunktionssystem (Programme und Informationen) bildet den einzig gangbaren Weg, die Steuerung der Beleuchtungsweite und -stärke während jedes Momentes der Fahrt in sicherer Weise vornehmen zu können.

Desweiteren ist zu beachten, daß die Erfindung nicht auf die hier dargestellten Ausführungsformen beschränkt ist und Modifikationen möglich sind. Der Umfang der Erfindung ist lediglich durch die beigefügten Patentansprüche bestimmt.

**Patentansprüche**

1. Lichtsystem für Kraftfahrzeuge aller Art mit einer Scheinwerfereinrichtung und einer Einstelleinrichtung zum Einstellen der Leuchtweite der Scheinwerfereinrichtung und einer Steuereinrichtung,
dadurch **gekennzeichnet**,
daß die Steuereinrichtung die Einstelleinrichtung automatisch derart steuert, daß während der Fahrt zu jedem Zeitpunkt die Mindestleuchtweite den aktuellen minimalen Anhalteweg des Fahrzeugs nicht unterschreitet und die Höchstleuchtweite den aktuellen maximalen Anhalteweg nicht überschreitet.

2. Automatisches Lichtsystem nach Anspruch 1, dadurch **gekennzeichnet**, daß die Leuchtrichtung der Scheinwerfereinrichtung in einer Horizontalebene abhängig vom Lenkwinkel des Fahrzeugs und unabhängig von der Mindestleuchtweite/Höchstleuchtweite einstellbar ist.

3. Automatisches Lichtsystem nach Anspruch 1 oder 2, dadurch **gekennzeichnet**, daß die Lichtstärke der Scheinwerfereinrichtung abhängig von der Mindestleuchtweite/Höchstleuchtweite automatisch einstellbar ist, wobei bei größerer Leuchtweite eine größere Lichtstärke als bei geringerer Leuchtweite gewählt wird.

4. Automatisches Lichtsystem nach Anspruch 1, 2 oder 3, dadurch **gekennzeichnet,** daß die Leuchtweite und -stärke abhängig vom Straßenzustand gleichzeitig und automatisch einstellbar sind, wobei die Straßenzustände in vier Grundstufen mit Hilfe des Anhaltewegs des Fahrzeugs eingeteilt werden, nämlich Trocken, Nass, Schneebedeckt und Vereist, und wobei jedem der Straßenzustände eine andere Mindestleuchtweite/Höchstleuchtweite und -stärke zugeordnet ist.

5. Automatisches Lichtsystem nach einem der Ansprüche 1-4, dadurch **gekennzeichnet**, daß die Leuchtweite und -stärke abhängig von den Sichtverhältnissen gleichzeitig einstellbar sind, wobei die Sichtverhältnisse in mindestens drei Grundstufen eingeteilt sind, nämlich gute Sicht, mittlere Sicht und schlechte Sicht, und wobei jedem der Sichverhältnisse eine unterschiedliche Mindestleuchtweite/Höchstleuchtweite und Lichtstärke zugeordnet ist.

6. Automatisches Lichtsystem nach einem der vorstehenden Ansprüche, **gekennzeichnet** durch einen Neigungswinkelsensor zur Ermittlung des Neigungswinkels zwischen Fahrzeug-Horizontalachse und Straßenoberfläche, wobei die Leuchtweite bei stehendem Fahrzeug und bei Bedarf während der Fahrt abhängig von dem Neigungswinkel korrigiert wird.

7. Automatisches Lichtsystem nach einem der vorstehenden Ansprüche, dadurch **gekennzeichnet,** daß die Einstelleinrichtung Eingabemittel aufweist zur Eingabe eines oder mehrerer der folgenden Parameter:

   - Straßenzustand,
   - Witterungsverhältnisse,
   - fahrzeugspezifische Daten,
   - fahrerspezifische Daten.

8. Automatisches Lichtsystem nach einem der vorstehenden Ansprüche, dadurch **gekennzeichnet,** daß die Mindestleuchtweite auf den minimalen Anhalteweg eingestellbar ist.

EP 0 699 559 B1

9. Automatisches Lichtsystem nach einem der vorstehenden Ansprüche, dadurch **gekennzeichnet,** daß die Scheinwerfereinrichtung für jede Fahrzeugseite einen Hauptreflektor und einen Nebelreflektor aufweist, deren Leuchtweiten und -stärken unabhängig voneinander einstellbar sind.

10. Automatisches Lichtsystem nach Anspruch 9,
dadurch **gekennzeichnet,** daß bei guter Sicht die Hauptreflektoren anhaltewegabhängig betrieben werden, bei mittlerer Sicht die Nebelreflektoren, wobei die Hauptreflektoren eingeschaltet auf einer Anfangsposition bleiben, und bei schlechter Sicht sowohl die Haupt- als auch die Nebelreflektoren anhaltewegabhängig betrieben werden.

11. Automatisches Lichtsystem für Kraftfahrzeuge nach einem der vorstehenden Ansprüche,
dadurch **gekennzeichnet,**
daß die Steuereinrichtung bei stehendem Fahrzeug oder geringen Geschwindigkeiten eine fixe Anfangsleuchtweite einstellt, die den Anhalteweg überschreitet, wobei die Anfangsleuchtweite insbesondere zu 30 m gewählt ist, und daß die Steuereinrichtung die Mindestleuchtweite einstellt, wenn der Anhalteweg die Anfangsleuchtweite überschreitet.

12. Automatisches Lichtsystem nach einem der Ansprüche 1 bis 11,
**gekennzeichnet** durch einen Außenlichtsensor, wobei die Lichtstärke der Scheinwerfereinrichtung abhängig von der Außenlichtstärke geregelt wird.

13. Automatisches Lichtsystem nach einem der vorstehenden Ansprüche,
dadurch **gekennzeichnet,** daß die Steuereinrichtung aus dem maximalen Anhalteweg eine Höchstleuchtweite ermittelt und daß die Leuchtweite während der Fahrt laufend automatisch so eingestellt wird, daß sie die aktuelle Höchstleuchtweite nicht überschreitet.

14. Automatisches Lichtsystem nach einem der Ansprüche 1-13,
dadurch **gekennzeichnet,** daß die Einstellung der Horizontalposition direkt mit dem Lenkrad gekoppelt ist.

15. Verfahren zur Steuerung der Leuchtweite der Scheinwerfereinrichtung eines Kraftfahrzeuges od. dgl.,
dadurch **gekennzeichnet,** daß man während der Fahrt automatisch laufend eine Mindestleuchtweite für die Scheinwerfereinrichtung ermittelt, die den Wert des aktuellen minimalen Anhaltewegs des Fahrzeugs nicht unterschreitet, und eine Höchstleuchtweite, den den aktuellen maximalen Anhalteweg nicht überschreitet.

16. Verfahren nach Anspruch 15,
dadurch **gekennzeichnet,** daß man den minimalen Anhalteweg aus der Summe des Bremsweges maximaler Länge und dem Mindestreaktionsweg eines Amateur- oder Berufsfahrers ermittelt und daß man den maximalen Anhalteweg aus der Summe des Bremswegs maximaler Länge und dem Höchstreaktionsweg eines Amateur- oder Berufsfahrers ermittelt.

17. Verfahren nach Anspruch 16,
dadurch **gekennzeichnet,** daß man den Bremsweg maximaler Länge beim maximal zulässig beladenen Fahrzeug unter Berücksichtigung der Geschwindigkeit und der Straßenverhältnisse sowie fahrzeugspezifischer Daten ermittelt.

18. Verfahren nach Anspruch 16,
dadurch **gekennzeichnet,** daß man den minimalen und maximalen Anhalteweg unter Berücksichtigung der Mindestreaktionszeit und der Höchstreaktionszeit von Amateur- oder Berufsfahrern und der Geschwindigkeit ermittelt, wobei die Reaktionszeiten für Amateur- und Berufsfahrern ständig in absolut gleichen Verhältnissen stehen.

19. Verfahren nach Anspruch 18,
dadurch **gekennzeichnet,** daß man eine von den Witterungs- und/oder Sichtverhältnissen abhängige Reaktionszeit berücksichtigt.

20. Verfahren nach einem der Ansprüche 15 bis 19,
dadurch **gekennzeichnet,** daß man die Leuchtweite kontinuierlich in Abhängigkeit vom Anhalteweg verändert.

21. Verfahren nach Anspruch 20,
dadurch **gekennzeichnet,** daß durch einen Eingriff des Fahrers die Leuchtweite zwischen einer dem Anhalteweg entsprechenden Position und einer Anfangsposition veränderbar ist.

22. Verfahren nach Anspruch 21,
dadurch **gekennzeichnet,** daß bei einer vom Fahrer manipulierten Leuchtweitenänderung die Geschwindigkeit der Änderung bei Verkürzung der Leuchtweite geringer ist als bei Erhöhung der Leuchtweite.

23. Verfahren nach Anspruch 20, d. g., daß beim Auslösen einer Notfallbremsung die Leuchtweite automatisch auf den Wert des noch verbleibenden maximalen Bremswegs reduziert wird, wenn dieser Bremsweg die Anfangsleuchtweite überschreitet, und ansonsten auf den Wert der Anfangsleuchtweite eingestellt wird.

24. Verfahren nach Anspruch 20, d. g., daß beim Auslösen einer Notfallbremsung die momentane Leuchtweite zum Zeitpunkt der Notfallbremsung automatisch während des gesamten Bremsvorgangs beibehalten wird.

25. Verfahren nach Anspruch 20, d. g., daß beim Auslösen einer Notfallbremsung die Leuchtweite automatisch auf den zum Zeitpunkt der Notfallbremsung zuletzt ausgeleuchteten Bereich fixiert und solange reduziert wird, bis gegebenfallsdie Anfangsleuchtweite erreicht ist, die dann beibehalten wird.

26. Verfahren nach Anspruch 20, d. g., daß man eine mittlere Leuchtweite einstellt, deren Wert zwischen den Werten für die Anhaltewege bei bei minimaler und maximaler Reaktionszeit liegt.

27. Verfahren nach einem der Ansprüche 15 bis 26,
dadurch **gekennzeichnet,** daß man die Beleuchtungsstärke der Scheinwerfereinrichtung abhängig von der Leuchtweite einstellt.

28. Verfahren nach einem der Ansprüche 15 bis 27,
dadurch **gekennzeichnet,** daß man die Leuchtbreite der Fahrzeugbeleuchtung maximal verringert, was wegen der Horizontalbewegung möglich ist, und mit einem fixen Reflektorwinkel auf die Straßenkategorie und die Sicherheit anderer Verkehrsteilnehmer abstimmt.

29. Verfahren nach einem der Ansprüche 15 bis 28,
dadurch **gekennzeichnet,** daß man die Beleuchtungsstärke abhängig von den Witterungsverhältnissen einstellt.

30. Automatisches Lichtsystem nach einem der Ansprüche 1 - 14, wobei

- das Lichtsystem als automatisches Multifunktionssystem (ALS) aus Programmen und Informationen aufgebaut ist,
- das Multifunktionssystem vier Grundstufen für die Straßenverhältnisse unterscheidet,
- das Multifunktionssystem in jeder der Stufen drei Stufen der Sichtverhältnisse unterscheidet, so daß zwölf Grundstufen erhalten werden,
- das Multifunktionssystem abhängig von der jeweiligen Grundstufe, aufgrund der Programme und eingegebener und aktueller Informationen, die momentane Leuchtweite so steuert, daß sie immer zwischen einer Mindest- und einer Höchstleuchtweite liegt, wobei die Formeln

$$\text{Mindestleuchtweite} = \text{minimaler Anhalteweg}$$

$$\text{Höchstleuchtweite} = \text{maximaler Anhalteweg}$$

erfüllt sind,
- das Multifunktionssystem in jeder Grundstufe die Leuchtstärke abhängig von der Grundstufe und der Leuchtweite derart steuert, daß der Bereich vor dem Fahrzeug optimal ausgeleuchtet wird.

31. Kraftfahrzeug mit einem automatischen Lichtsystem nach einem der Ansprüche 1 bis 14,
wobei das Lichtsystem gemäß einem Verfahren nach einem der Ansprüche 15 bis 29 gesteuert wird.

**Claims**

1. A light system for motor vehicles of all types comprising a headlamp means and an adjusting means for adjusting the beam range of the headlamp means and a control means, **characterised** in that the control means controls the adjusting means automatically in such a manner that during the journey at any instant the minimum beam range does not drop below the actual minimum stopping distance of the vehiale and does not exceed the actual maximum stopping distance.

2. Automatic light system according to claim 1, **characterised** in that the beam direction of the headlamp means is adjustable in a horizontal plane in dependence upon the steering angle of the vehicle and independently of the minimum beam range/maximum beam range.

3. Automatic light System according to claim 1 or 2, **characterised** in that the light intensity of the headlamp means is automatically adjustable in dependence upon the minimum beam range/maximum beam range, a greater light intensity being chosen for greater beam ranges than for smaller beam ranges.

4. Automatic light system according to claim 1, 2 or 3, **characterised** in that the beam range and intensity are adjustable simultaneously and automatically in dependence upon the road condition, the road conditions being divided, by means of the stopping distance of the vehicle, into four basic stages, that is dry, wet, covered with snow and icey, a different minimum beam range/maximum beam range and intensity being associated with each of the road conditions.

5. Automatic light system according to any one of claims 1 to 4, **characterised** in that the beam range and intensity are adjustable simultaneously in dependence upon the visibility conditions, the visibility conditions being divided into at least three basic stages, that is good visibility, average visibility and poor visibility, a different minimum beam range/maximum beam range and light intensity being associated with each of the visibility conditions.

6. Automatic light system according to any one of the preceding claims, **characterised** by an inclination angle sensor for determining the inclination angle between the vehicle horizontal axis and road surface, the beam range being corrected with the vehicle stationary and if necessary during the journey in dependence upon the inclination angle.

7. Automatic light system according to any one of the preceding claims, **characterised** in that the adjusting means comprise input means for inputting one or more of the following parameters:

   - road state,
   - weather conditions,
   - vehic1e-specific data,
   - driver-specific data.

8. Automatic light system according to any one of the preceding claims, **characterised** in that the minimum beam range is adjustable to the minimum stopping distance.

9. Automatic light system according to any one of the preceding claims, **characterised** in that the headlamp means comprise for each vehicle side a main reflector and a fog reflector, the beam ranges and intensities of which are adjustable independently of each other.

10. Automatic light system according to claim 9, **characterised** in that with good visibility the main reflectors are operated in dependence upon the stopping distance and with average visibility the fog reflectors, the main reflectors remaining switched to an initial position, and with poor visibility both the main reflectors and the fog reflectors are operated in dependence upon the stopping distance.

11. Automatic light system for motor vehicles according to any one of the preceding claims, **characterised** in that when the vehicle is stationary or at low speeds the control means sets a fixed initial beam range which exceeds the stopping distance, the initial beam range being selected in particular at 30 m, and that the control means adjusts the minimum beam range when the stopping distance exceeds the initial beam range.

12. Automatic light system according to any one of claims 1 to 11, **characterised** by an external light sensor, the light intensity of the headlamp means being regulated in dependence upon the external light intensity.

13. Automatic light system according to any one of the preceding claims, **characterised** in that the control means determines a maximum beam range from the maximum stopping distance and that the beam range is continuously adjusted during the journey so that it does not exceed the prospective maximum beam range.

**14.** Automatic light system according to any one of claims 1 to 13, **characterised** in that the adjustment of the horizontal position is directly coupled to the steering wheel.

**15.** Method for controlling the beam range of the headlamp means of a motor vehicle or the like, **characterised** in that during the journey a minimum beam range for the headlamp means is automatically and continously determined which does not drop below the value of the momentary stopping distance of the vehcle and a maximum beam range which does not exceed the maximum stopping distance.

**16.** Method according to claim 15, **characterised** in that the minimum stopping distance is determined from the sum of the maximum braking distance and the minimum reaction distance of an inexperienced or professional driver and that the maximum stopping distance is determined from the sum of the maximum braking distance and the maximum reaction distance of an inexperienced or professional driver.

**17.** Method according to claim 16, **characterised** in that the maximum braking distance is determined for the maximum loaded vehicle in accordance with the speed and the road conditions as well as vehicle-specific data.

**18.** Method according to claim 16, **characterised** in that the minimum and maximum stopping distances are determined in accordance with the minimum and maximum reaction times of an inexperienced or professional driver and the speed, said reaction times of inexperienced and professional drivers being at all times absolutely the same ratio.

**19.** Method according to claim 18, **characterised** in that a reaction time dependent on the weather and/or visibility conditions is taken into account.

**20.** Method according to any one of claims 15 to 19, **characterised** in that the beam range is continuously adjusted in dependence upon the stopping distance.

**21.** Method according to claim 20, **characterised** in that by intervention of the driver the beam range can be varied between a position corresponding to the stopping distance and an initial position.

**22.** Method according to claim 21, **characterised** in that in the case of a beam range change effected by the driver the rate of change when shortening the beam range is lower than when increasing the beam range.

**23.** Method according to claim 20, **characterised** in that on initiation of an emergency braking the beam range is automatically reduced to the value of the still remaining maximum braking distance if said braking distance exceeds the initial beam range and is otherwise adjusted to the value of the initial beam range.

**24.** Method according to claim 20, **characterised** in that on initiation of an emergency braking the instantaneous beam range at the instant of the emergency braking is automatically retained during the entire braking operation.

**25.** Method according to claim 20, **characterised** in that on initiating an emergency braking the beam range is automatically fixed to the last illuminated area at the instant of the emergency braking and then reduced until the initial beam range is possibly reached, which is then retained.

**26.** Method according to claim 20, **characterised** in that a mean beam range is set, the value of which lies between the values for the stopping distances with minimum and maximum reaction times.

**27.** Method according to any one of claims 15 to 26, **characterised** in that the light intensity of the headlamp means is adjusted in dependence upon the beam range.

**28.** Method according to any one of claims 15 to 27, **characterised** in that the beam width is narrowed to a minimum, which is possible due to the horizontal movement, and adapted with a fixed reflector angle with respect to the road category and road security of other road users.

**29.** Method according to any one of claims 15 to 28, **characterised** in that the light intensity is adjusted in dependence upon the weather conditions.

**30.** Automatic light system according to one of claims 1 to 14, wherein,

- the light system being constructed as automatic multifunctional system (ALS) from programs and information,
- the multifunctional system distinguishes between four basic stages for the road conditions,
- the multifunctional system distinguishes in each of the stages three stages of visibility conditions, thus giving twelve basic stages,
- in dependence upon the particular stage, on the basis of the programs and entered and current information, the multifunctional system controls the instantaneous beam range in such a manner that it always lies between a minimum and a maximum beam range, the formulae

minimum beam range = minimum stopping distance

maximum beam range = maximum stopping distance

being fulfilled,
- in each basic stage the multifunctional system controls the light intensity in dependence upon the basic stage and the beam range in such a manner that the area in front of the vehide is illuminated in optimum manner.

31. Motor vehicle comprising an automatic light system according to one of claims 1 to 14, the light system being controlled following a method according to any one of claims 15 to 29.

**Revendications**

1. Système d'éclairage pour des véhicules automobiles de tous types, équipé d'un dispositif projecteur lumineux et d'un dispositif régleur, destiné a régler la portée d'éclairage du dispositif projecteur lumineux et équipé d'un dispositif de commande, caractérisé en ce que le dispositif de commande assure automatiquement la commande du dispositif de réglage, de manière que, pendant le roulage, à tout moment, la portée d'éclairage minimale ne descende pas au-dessous de la distance d'arrêt minimale instantanée du véhicule et que la portée d'éclairage maximale ne dépasse pas la distance d'arrêt maximale instantanée.

2. Système d'éclairage automatique selon la revendication 1, caractérisé en ce que la direction d'éclairage du dispositif projecteur lumineux dans un plan horizontal est réglable en fonction de l'angle de braquage du véhicule et en fonction de la portée d'éclairage minimale/portée d'éclairage maximale.

3. Système d'éclairage automatique selon la revendication 1 ou 2, caractérisé en ce que l'intensité lumineuse du dispositif projecteur lumineux est réglable automatiquement en fonction de la portée d'éclairage minimale/portée d'éclairage maximale, une intensité lumineuse plus élevée étant choisie lorsque la portée d'éclairage est plus grande que lorsque la portée d'éclairage est plus faible.

4. Système d'éclairage automatique selon la revendication 1, 2 ou 3, caractérisé en ce que la portée d'éclairage et l'intensité d'éclairage sont réglables simultanément et automatiquement en fonction de l'état de la route, les états de la route étant classés en quatre états de base à l'aide de la distance d'arrêt du véhicule, précisément sec, humide, enneigé et givré, et où, à chacun des états de la route, est associée une autre valeur de la portée d'éclairage minimale/portée d'éclairage maximale et de l'intensité d'éclairage.

5. Système d'éclairage automatique selon l'une quelconque des revendications 1 à 4, caractérisé en ce que la portée d'éclairage et l'intensité d'éclairage sont réglables simultanément en fonction des conditions de visibilité, les conditions de visibilité étant cassées en au moins trois niveaux de base, précisément bonne, visibilité moyenne et mauvaise visibilité, et, à chacune des conditions de visibilité, étant associée une valeur différente de la portée d'éclairage minimale/portée d'éclairage maximale, et de l'intensité d'éclairage.

6. Système d'éclairage automatique selon l'une quelconque des revendications 1 à 5, caractérisé par un capteur d'angle d'inclinaison destiné à déterminer l'angle d'inclinaison entre l'axe horizontal du véhicule et la surface de la route, la portée d'éclairage étant corrigée en fonction de l'angle d'inclinaison lorsque le véhicule est l'arrêt et, en cas de besoin, pendant le roulage.

7. Système d'éclairage automatique selon l'une quelconque des revendications 1 à 6, caractérisé en ce que le dispositif de réglage présente des moyens d'introduction conçus pour introduire un ou plusieurs des paramètres suivants :

- état de la route,
- conditions météorologiques,
- données spécifiques au véhicule,
- données spécifiques au conducteur.

8. Système d'éclairage automatique selon l'une quelconque des revendications 1 à 7, caractérisé en ce que la portée d'éclairage minimale est réglable à la valeur de la distance d'arrêt minimale.

9. Dispositif d'éclairage automatique selon l'une quelconque des revendications 1 à 8, caractérisé en ce que le dispositif projecteur lumineux présente, pour chaque côté du véhicule, un réflecteur principal et un réflecteur antibrouillard, dont les portées d'éclairage et les intensités d'éclairage sont réglables indépendamment les unes des autres.

10. Système d'éclairage automatique selon la revendication 9, caractérisé en ce que, lorsque la visibilité est bonne, les réflecteurs principaux sont exploités en fonction de la distance d'arrêt, lorsque la visibilité moyenne les réflecteurs antibrouillard sont utilisés, les réflecteurs principaux restant mis en service sur une position initiale, et lorsque la visibilité est mauvaise dans les réflecteurs principaux, qu'également les réflecteurs antibrouillard sont utilisés, en fonction de la distance d'arrêt.

11. Système d'éclairage automatique pour des véhicules automobiles selon l'une quelconque des revendications 1 à 10, caractérisé en ce que le dispositif de commande règle, lorsque le véhicule est à l'arrêt ou évolue à de faibles vitesses, une portée d'éclairage initiale fixe, qui est supérieure à la distance d'arrêt, la portée d'éclairage initiale étant choisie en particulier à 30 mètres et en ce que le dispositif de commande règle la portée d'éclairage minimale lorsque la distance d'arrêt dépasse la portée d'éclairage initiale.

12. Système d'éclairage automatique selon l'une quelconque des revendications 1 à 11, caractérisé par un capteur de lumière extérieure, l'intensité lumineuse du dispositif projecteur lumineux étant réglée en fonction de l'intensité de la lumière extérieure.

13. Système d'éclairage automatique selon l'une quelconque des revendications 1 à 12, caractérisé en ce que le dispositif de commande détermine, à partir de la distance d'arrêt maximale, une portée d'éclairage maximale, et en ce que la portée d'éclairage est réglée automatiquement de façon continue pendant le roulage, de manière à ne pas dépasser la portée d'éclairage maximale instantanée.

14. Système d'éclairage automatique selon l'une quelconque des revendications 1 à 13, caractérisé en ce que le réglage de la position horizontale est directement couplé au volant.

15. Procédé de commande de la portée d'éclairage du dispositif projecteur lumineux d'un véhicule automobile ou analogue, caractérisé en ce que, pendant le roulage, on détermine automatiquement, de façon continue, pour le dispositif projecteur lumineux une portée d'éclairage minimale qui ne descend pas au-dessous de la valeur de la distance d'arrêt minimale instantanée du véhicule et une portée d'éclairage maximale qui ne dépasse pas la distance d'arrêt maximale instantanée.

16. Procédé selon la revendication 15, caractérisé en ce qu'on détermine la distance d'arrêt minimale à partir de la somme de la distance de freinage de longueur maximale et de la distance de réaction minimale d'un conducteur amateur ou d'un conducteur professionnel et qu'on détermine la distance d'arrêt maximale à partir de la somme de la distance de freinage de longueur maximale et de la distance de réaction maximale d'un conducteur amateur ou d'un conducteur professionnel.

17. Procédé selon la revendication 16, caractérisé en ce qu'on détermine la distance de freinage de longueur maximale pour un véhicule à la charge maximale admissible, en prenant en considération la vitesse et les conditions de la route, ainsi que des données spécifiques au conducteur.

18. Procédé selon la revendication 16, caractérisé en ce qu'on détermine la distance d'arrêt minimale et la distance d'arrêt maximale en prenant en considération le temps de réaction minimal et le temps de réaction maximal de conducteurs amateurs ou professionnels et de la vitesse, les temps de réaction des conducteurs amateurs et professionnels étant situés en permanence dans des rapports absolus identiques.

**19.** Procédé selon la revendication 18, caractérisé en ce qu'on prend en considération un temps de réaction qui dépend des conditions météorologiques et/ou de visibilité.

**20.** Procédé selon l'une quelconque des revendications 15 à 19, caractérisé en ce qu'on modifie de façon continue la portée d'éclairage en fonction de la distance d'arrêt.

**21.** Procédé selon la revendication 20, caractérisé en ce que, par une intervention du conducteur, on peut modifier la portée d'éclairage entre une position correspondant à la distance d'arrêt et une position initiale.

**22.** Procédé selon la revendication 21, caractérisé en ce que, dans le cas d'une modification de la portée d'éclairage issue d'une manipulation faite par le conducteur, la vitesse de la modification est plus faible en cas de raccourcissement de la portée d'éclairage que lorsqu'il s'agit d'une augmentation de cette portée d'éclairage.

**23.** Procédé selon la revendication 20, caractérisé en ce que, en cas de déclenchement d'un freinage de secours, la portée d'éclairage est automatiquement réduite à la valeur de la distance de freinage maximale restant encore à parcourir, lorsque cette distance de freinage dépasse la portée d'éclairage initiale et, autrement, elle est réglée à la valeur de la porte d'éclairage initiale.

**24.** Procédé selon la revendication 20, caractérisé en ce que, en cas de déclenchement d'un freinage de secours, la portée d'éclairage instantanée au moment du freinage de secours est automatiquement conservée pendant la totalité de la durée du processus de freinage.

**25.** Procédé selon la revendication 20, caractérisé en ce que, en cas de déclenchement d'un freinage de secours, la portée d'éclairage est fixée automatiquement à la dernière zone illuminée au moment du freinage de secours et est réduite jusqu'à ce qu'on atteigne, le cas échéant, la portée d'éclairage initiale qui est ensuite conservée.

**26.** Procédé selon la revendication 20, caractérisé en ce qu'on règle une portée d'éclairage moyenne dont la valeur est située entre les valeurs des distances d'arrêt que l'on a pour le temps de réaction minimal et le temps de réaction maximal.

**27.** Procédé selon l'une quelconque des revendications 15 à 26, caractérisé en ce qu'on règle l'intensité d'éclairage du dispositif projecteur lumineux en fonction de la portée d'éclairage.

**28.** Procédé selon l'une quelconque des revendications 15 à 27, caractérisé en ce qu'on limite au maximum la largeur d'éclairage du dispositif d'éclairage du véhicule, ce qui est possible du fait du déplacement horizontal, et on accorde, avec un angle de réflecteur fixe, en fonction de la catégorie de route et de la sécurité d'autres participants de la circulation.

**29.** Procédé selon l'une quelconque des revendications 15 à 28, caractérisé en ce qu'on règle l'intensité d'éclairage en fonction des conditions météorologiques.

**30.** Système d'éclairage automatique selon l'une quelconque des revendications 1 à 14, dans lequel

- le système d'éclairage est construit sous la forme de système multifonctions automatique (ALS), composé à partir de programmes et d'informations,
- le système multifonctions distingue quatre niveaux de base pour les conditions de route,
- le système multifonctions distingue dans chacun des niveaux trois niveaux de conditions de visibilité, si bien que sont obtenus douze niveaux de base,
- le système multifonctions, en fonction du niveau de base respectif, sur la base des programmes et des informations introduites et instantanées, module la portée d'éclairage instantanée de manière à ce qu'elle se situe toujours entre une portée d'éclairage minimale et une portée d'éclairage maximale, en satisfaisant aux formules :

portée d'éclairage minimale = distance d'arrêt minimale

portée d'éclairage maximale = distance d'arrêt maximale

- le système multifonctions commande à chaque niveau de base l'intensité lumineuse en fonction du niveau de base et de la portée d'éclairage, de manière que la zone se trouvant devant le véhicule soit illuminée de façon optimale.

31. Véhicule automobile équipé d'un système d'éclairage automatique selon l'une quelconque des revendications 1 à 14, le système d'éclairage étant commandé selon un procédé suivant l'une quelconque des revendications 15 à 29.

Df

Ds

Dw

80

60

HT
VT

100

70

R  G

10    20      40   30

Dv

De

Fig.1

V

1            2

R

V              R

Fig.2

320

FAHRZEUG

330

Typ
Felgen
Reifen

AUTOMATISCHES
LICHTSISTEM

Fig.13

A

Re | Rr

Li    Re

M

D

220    210

230    200

E

250

240

R_B

B

⊕

Pk

R_A

Pw    C

⊖

Fig.3

400'

400

11

300'

300

21

Fig.4

Fig.5

Fig.6

Fig.7

Fig.8

Fig.9

Fig.10

B1

R

B1=B2

B2

50 km/h

K 30m F

Fig.11

310

300

Dv

TROCKEN · FEUCHT · SCHNEE · EIS

Dl

340

350

350

DI

360

H N

Da

110

N

H

Fig.12

Fig.14

Fig.15

# AUTOMATISCHES LICHTSYSTEM – ALS

Fig.16